# EUROPEAN PATENT APPLICATION

(11) **EP 2 903 111 A1**
(43) Date of publication of application: **05.08.2015**
(21) Application number: 14153088.1
(22) Date of filing: 29.01.2014
(51) Int. Cl.: H02G 15/013

(54) **Method for fixing a cable to a part, assembly comprising a cable fixed to a part, and tank comprising such an assembly**

(71) Applicant: Inergy Automotive Systems Research (Société Anonyme), 1120 Bruxelles (BE)
(72) Inventor: de Keyzer, Pierre, 1050 Bruxelles (BE); Slusser, Kevin, 1050 Ixelles (BE)
(74) Representative: Remy, Vincent Noel Paul

(57) **Abstract**

It is proposed a method for fixing a cable in a plastic part, comprising the steps of:
- selecting a cable comprising a wire surrounded by a plastic sheath, heating the wire;
- applying a plastic material around the cable comprising the heated wire.

The heating is such that the plastic material is bonded to the sheath, the applied plastic material forming a plastic part which is fixed to the sheath.

## Description

### Field of Invention

The field of the invention relates to a method for fixing a cable to a part, an assembly comprising a part fixed to a cable, and a tank comprising such an assembly.

### Background

When an electrical cable or a data cable has to be mounted through a through-hole in a leak tight way, according to prior art solutions, use is made of an O-ring or a glue which is arranged between the wall of the though-hole and the cable.

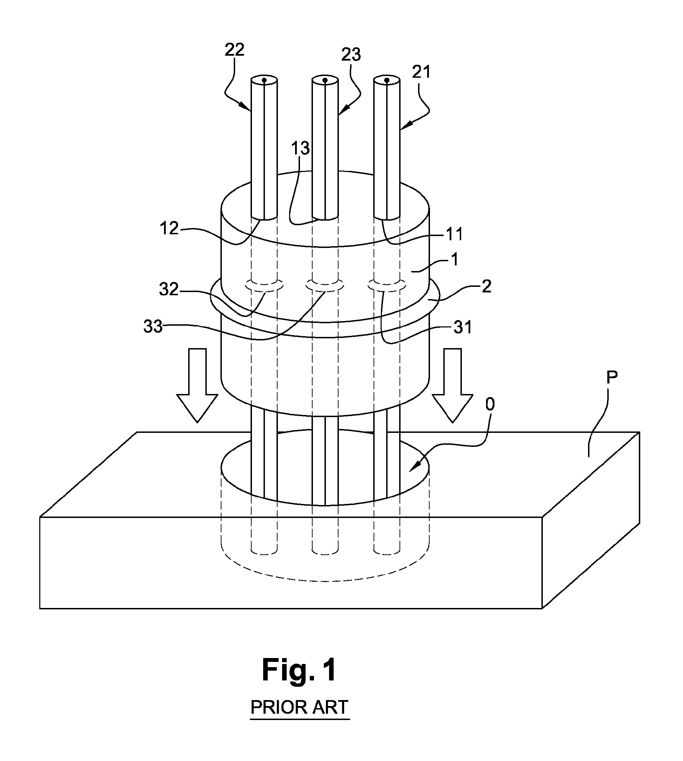

Figure 1 illustrates a background solution for mounting three electrical cables through an opening O of a part P. A connector 1 e.g. made of a polyamide material is provided with three through-holes 11, 12, 13 for three electrical cables 21, 22, 23. Each electrical cable 21, 22, 23 is provided with an O-ring 31, 32, 33 for leak tight mounting in the connector. The connector is provided with a further O-ring 2 for leak tight mounting of the connector 1 in the opening O.

A disadvantage of this solution is that O-rings tend to lose their good compression properties after aging. Consequently, the sealing is not ensured in the long term due to durability issues. Further, plastic parts tend to show creep if a constant stress is applied thereon. As a result, the O-ring will not be properly maintained in cases of constant stress.

Other solutions use a glue or mastic instead of an O-ring. Also such solutions do not ensure a good durability of the seal. Moreover, when the part P is a tank part there is a risk that the glue contaminates the content of the tank.

### Summary

The object of embodiments of the invention is to ensure a sealed interface between a cable and a part in an improved manner.

According to a first aspect of the invention there is provided a method for fixing a cable in a plastic part, comprising the steps of: selecting a cable comprising a wire surrounded by a plastic sheath; heating said wire; and applying a plastic material around said cable comprising said heated wire. The heating is such that said plastic material is bonded to said sheath. The applied plastic material forms the plastic part which is fixed to the sheath.

Embodiments of the invention are based *inter alia* on the insight that by heating the wire of the cable, sufficient heat may be generated at the interface between the sheath of the cable and the plastic material that is to form the plastic part, for the sheath to bond to the plastic material. In that way a very robust and leak-tight seal may be obtained. In other words neither O-ring, nor glue is needed between the sheath and the part. In particular embodiments, forming the plastic part may consist in forming a tank body or a portion of the tank body directly around the cable such that the plastic material of the tank body or portion of the tank body is bonded to the plastic sheath of the cable.

According to an embodiment the heating of the wire comprises causing heat to be generated in said wire. In a preferred embodiment the wire is a wire having an electrical resistivity; and the heating comprises applying an electric current through the wire. In other words the resistive property of the wire may be used to cause heat to be generated in the cable in order to increase the temperature of its sheath. This is a very convenient way for causing sufficient heat to be generated in the cable, and this technique can easily be applied regardless of the technique used for forming the plastic part. The applied current may comprises a DC component and/or an AC component.

According to a variant the heating comprises applying heat on said wire. According to an exemplary embodiment the cable may be placed in an oven to heat it, whereupon the plastic material may be applied, e.g. by placing the heated cable in a mould and injecting the plastic material in the mould. Applying heat at one end or at both ends of the wire is another option, e.g. by connecting said wire to a high temperature source.

In a preferred embodiment the method further comprises heating the plastic material before the applying thereof. In that way the bond between the plastic material and the sheath may be further improved.

In a preferred embodiment the method for applying of the plastic material comprises overmoulding the cable with molten plastic material. In an exemplary embodiment the overmoulding comprises: placing the cable between a first mould part comprising a first cavity and a second mould part comprising a second cavity, wherein the first and second cavity are designed for delimiting a volume which surrounds the cable; and injecting the plastic material around the cable whilst heating the wire or shortly after having heated the wire. The skilled person understands that more than two mould parts may be used and/or that more than one cable may be overmoulded depending on the application of the part that is being manufactured. Preferably the heating is performed by connecting the wire to an electrical power source outside of the mould formed by said first and second mould parts. Alternatively the heating may be performed by actively applying heat to the wire from outside the mould formed by said first and second mould parts. Optionally the first and/or the second mould part may be provided with a channel for receiving the cable, in which case the cable is placed in the channel.

In a particular embodiment the method for applying of the plastic material can be performed by using a "hot pressing" process. This process is based on the use of plastic granules that are introduced inside a mould. For example, once the cable is introduced inside the mould, the cable is heated and the plastic granules are heated so as to be in a molten state, and to bond with the heated cable (i.e. sheath part). The "hot pressing" process is well known and thus it is not further described in detail in this document.

In a preferred embodiment the heating of the wire is such that said plastic sheath bonds to the plastic material, by fusing together the plastic sheath and the plastic material through the heat applied on/generated in the wire.

Preferably the plastic sheath is made of a polymer material that is compatible with the plastic material in the sense that polymer entanglements can be created at the interface of the sheath and the plastic material. Preferably the plastic material is a thermoplastic material, and the sheath is made of a thermoplastic material.

In a possible embodiment the sheath is made of polyamide material, e.g. PA66, and the plastic material is also made of a polyamide material. Optionally, the plastic material could be a polyethylene or polypropylene comprising an additive (for example, PRIEX (registered trademark)) to ensure its compatibility with the material of the sheath.

In an alternative embodiment the wire is an optical wire, and the heating comprises applying optical signals through said wire.

According to another aspect of the invention there is provided an assembly of a part and a cable, said part being fixed to the cable. The cable comprises a wire surrounded by a plastic sheath. The part comprises a plastic material which is bonded to the plastic sheath.

Preferably the plastic material of the part is overmoulded on the sheath of the cable. More preferably, the plastic material surrounds the cable over a length which is smaller than the length of the cable.

In a preferred embodiment the material of the plastic sheath is bonded to the plastic material, wherein an interface between the sheath and the plastic material comprises polymer entanglements between the material of the sheath and the plastic material.

Preferably the wire is a wire having a resistivity which is larger than 0.01 Ohm*m (at 20°C), more preferably larger than 0,1 Ohm*m (at 20°C). Typically the wire is a metal wire.

In a possible embodiment the sheath is made of a polyamide material; and/or the plastic material is a poly-ethylene material optionally comprising an additive for improving the compatibility, a polyamide material or a polypropylene material.

According to yet another aspect of the invention there is provided an assembly of a part and a cable, said assembly being manufactured according to any one of the embodiments of the method disclosed above.

According to a further aspect of the invention there is provided a tank comprising an assembly of any one of the embodiments above, wherein the part is a wall part of the tank or is mounted in a wall of the tank, or is the tank itself.

In a preferred embodiment the tank comprises an internal heater comprising a portion of the cable of the assembly. This is a particularly useful application in view of the fact that the electrical resistivity of the wire of such a cable is preferably relatively high in order to be capable of generating heat in the tank, and this electrical property can be used advantageously in embodiments of the invention to bond the sheath to the plastic material.

Embodiments of the invention may be used in additive tanks, in particular tanks for diesel additives, such as urea tanks, in gasoline fuel tanks, in other fuel tanks, etc. The tank according to the invention is preferably made of plastic, that is to say made of a material comprising at least one synthetic resin polymer. In a preferred embodiment the tank is made of polyamide, e.g. polyamide-6. However, all types of plastic may be suitable. Particularly suitable are plastics that belong to the category of thermoplastics. The term "thermoplastic" is understood to mean any thermoplastic polymer, including thermoplastic elastomers, and blends thereof. The term "polymer" is understood to mean both homopolymers and copolymers (especially binary or ternary copolymers). Preferably, the tank also comprises a layer of a fuel- or additive-impermeable resin such as, for example, EVOH (a partially hydrolysed ethylene/vinyl acetate copolymer), e.g. an EVOH layer between two HDPE layers. Alternatively, the tank may be subjected to a surface treatment (fluorination or sulphonation) for the purpose of making it impermeable to the liquid/vapors inside the tank.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a prior art embodiment;
Figures 2A, 2B and 2C illustrate schematically a first embodiment of the method of the invention and show a top view of a bottom mould part on which a cable is placed, a side view with the mould open and a side view with the mould closed, respectively;
Figure 3 is a schematic view of a part fixed to a cable according to a first embodiment of the invention;
Figure 4 a schematic view of a part fixed to a cable according to a second embodiment of the invention;
Figure 5 illustrates schematically a second embodiment of the method of the invention; and
Figures 6A, 6B and 6C illustrate schematically three variants of cables suitable for use in a method of the invention; and
Figure 7 a schematic view of two parts fixed to a cable according to a third embodiment of the invention.

### Description of embodiments

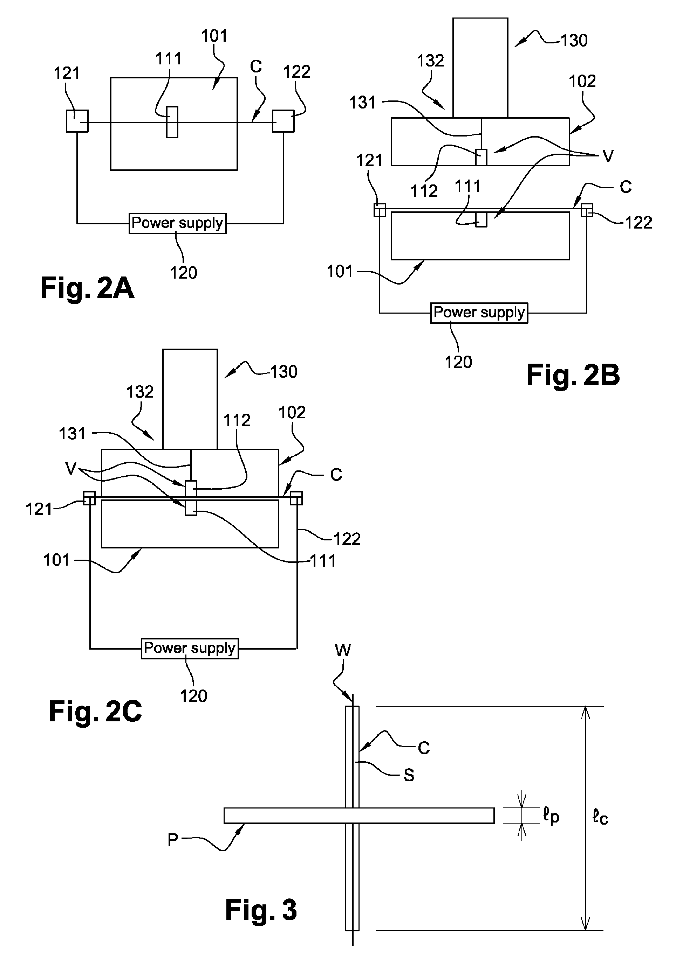

Figures 2A-2C illustrate a first embodiment of a method for fixing a cable C in a plastic part P. Although not illustrated in figures 2A-2C, the cable comprises a wire surrounded by a plastic sheath. In the illustrated embodiment the wire is an electrical wire having an electrical resistance, and the wire is heated by sending an electric current, typically a DC current, through the wire and a heated plastic material is applied around the wire by overmoulding.

The overmoulding process is performed as follows using a two-part mould 101, 102. In a first step the cable C is placed on a bottom mould part 101 comprising a bottom cavity 111, see the top view of figure 2A and the side view of figure 2B. In a second step a top mould part 102 comprising a top cavity 112 is brought in contact with the bottom mould part 101, see the side view of figure 2C. The top and bottom cavities 111, 112 are designed for delimiting a volume which surrounds the cable C. In a third step a heated plastic material is injected via an injection moulding machine 130, an injection nozzle 132, and an injection channel 131 in the top mould part 102. Simultaneously the wire of the cable C is heated by connecting said wire via connectors 121, 122 to an electrical power source 120 outside of the mould 101, 102. Optionally the bottom and/or top mould 101, 102 are provided with a channel (not-illustrated) for tightly receiving the cable C.

The heating of the wire is such that the plastic sheath of the cable C bonds to the plastic material through fusing. If the sheath is made from a polyamide 6 material the current sent through the wire is such that the temperature of the wire is higher than the melting temperature of the polyamide 6 material, e.g. a temperature of more than 230 degrees Celsius. Typically, the wire is a metal wire having an electrical resistivity which is larger than 0.01 Ohm*m (at 20°C), e.g. between 0,10 and 10 Ohm*m (at 20°C). The current may have a DC component and/or an AC component.

The plastic material is injected in the mould in a molten state, but the temperature of the injected plastic material will quickly decrease as the material spreads in the volume V formed by the cavities 111, 112. If the wire would not be heated, the temperature of the molten plastic material, when reaching the sheath of the cable C, would be too low for causing a good fusing of the sheath material and the injected plastic material. However, by sending a current though the wire, sufficient heat is generated at the interface between the sheath and the injected material, such that a good bond is achieved.

The plastic sheath is made of a thermoplastic polymer material that is compatible with the injected thermoplastic material in the sense that polymer entanglements are created at the interface of the sheath and the plastic material. The sheath may be made e.g. of a polyamide material, and the injected plastic material may be e.g. a compatible poly-ethylene material optionally comprising a additive for improving the compatibility (e.g. PE grafted with maleic anhydride, PRIEX®), a polyamide material or a compatible polypropylene material. A polyethylene, grafted with an extra high content of maleic anhydride has the advantage that the grafted maleic anhydride introduces polarity to the polymer achieving compatibility between polyolefins and more polar materials or polymers like EVOH or Polyamide. More generally, the skilled person understands that many compatible materials exist for the sheath and the plastic part that is to be formed. There exist tables showing plastic welding compatibility (see e.g. www.lpkfusa.com/lq from the laser welding company LPFK). Such welding compatibility tables also provide a good indication of the compatibility of two materials (sheath material and plastic material of part to be formed) that are being overmoulded.

In the first embodiment of figure 2A-2C, instead of heating the wire by sending a current through the wire, there could be applied a high temperature to said wire from outside the mould formed by said bottom and top mould parts 101, 102.

Figure 3 illustrates a first embodiment of a part P fixed to a cable C. The cable C comprises a wire W surrounded by a plastic sheath S. The part P is made of a plastic material which is adhered to the plastic sheath S. The plastic material of part P is preferably overmoulded around a portion of the cable C. The part P may be fixed to the cable C using e.g. the method disclosed in the embodiment of figures 2A-2C. Typically the plastic material surrounds the cable over a length l_{P} which is smaller than the length of the cable l_{C}.

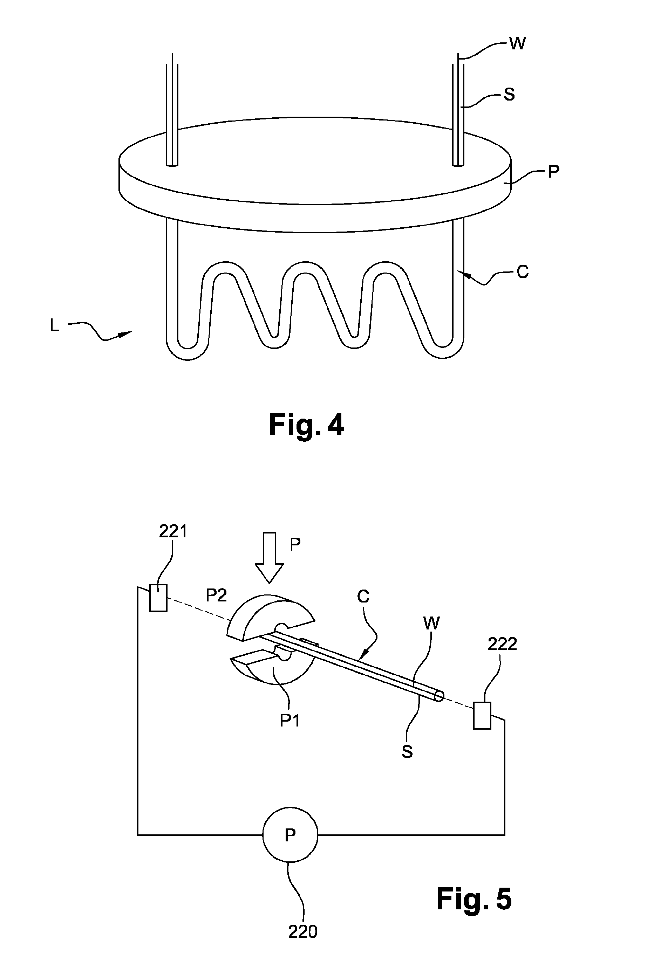

Figure 4 illustrates a second embodiment of a part P fixed to a cable C. The cable C comprises a wire W surrounded by a plastic sheath S. The part P is made of a plastic material and is adhered at two locations to two respective circumferential portions of the plastic sheath S, such that the cable forms a loop L at one side of the part P. A possible application of such a part P, is as a flange part that is weldable in an opening in the tank, where the cable C is used as a heating element for heating a part of a tank. The plastic material of part P is preferably overmoulded around the respective portions of the cable C. The part P may be fixed to the cable C using e.g. the method disclosed in the embodiment of figures 2A-2C.

Figure 5 illustrates a second embodiment of a method for fixing a cable C in a plastic part. The cable C comprises a wire surrounded by a plastic sheath S. In the illustrated embodiment the wire is an electrical wire having an electrical resistance, and the wire is heated by sending an electric current through the wire. This is done by connecting the wire via connectors 221, 222 to an electrical power source 220.

Here the applied material consists of two parts P1 and P2 of a plastic material. The applying of the plastic material comprises pressing first part P1 against second part P2 with the cable C inserted between the first part P1 and the second part P2, whilst the cable is heated such that the material of the sheath intermingles with the plastic material of the parts P1, P2 at the interface between the sheath and the parts P1, P2. If the parts P1, P2 are not too big, the heat in combination with the pressure may be sufficient to also adhere part P1 to part P2.

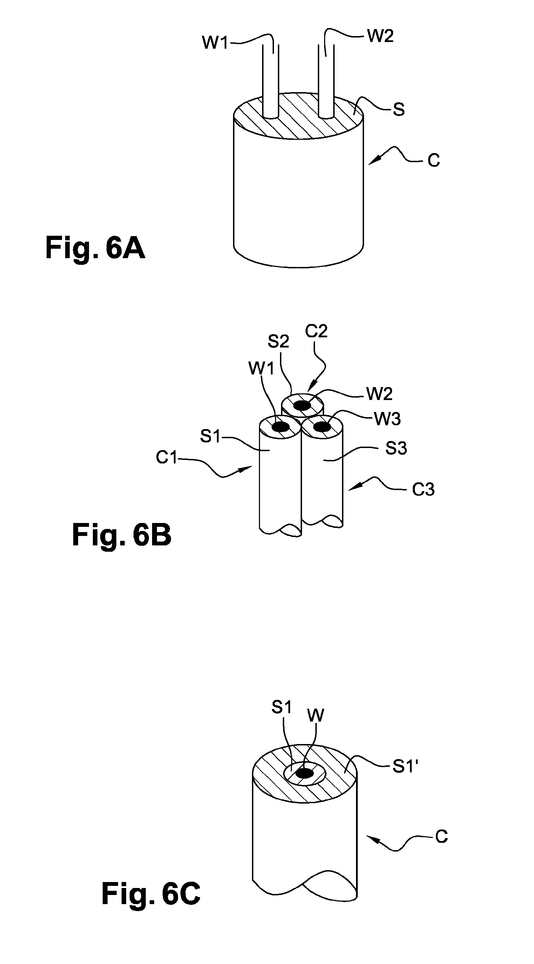

Figures 6A, 6B and 6C illustrate three variants of a cable that may be used in embodiments of the method of the invention.

According to the variant of figure 6A the cable C comprises a first wire W1 and a second wire W2 which are received in the same sheath S. The first wire W1 may be a highly conductive wire whilst the second wire W2 may have a determined electrical resistance so that it is capable of generating sufficient heat in the sheath when the second wire W2 is connected to a power source, e.g. the power source 120, 220 in the embodiments of figures 2A-2C or of figure 5. The second wire W2 may have a further function, but could also have merely a heating function. The first wire W1 may be used to feed e.g. an electrical component in the tank.

According to the second variant of figure 6B a plurality of cables C1, C2, C3 may be used in a grouped fashion. The cables may be the same or different. E.g. the electrical resistance of the wires W1, W2, W3 of the cables C1, C2, C3 may be the same or may be different. The material of the sheaths S1, S2 and S3 is the same or compatible so that a good bond may be obtained in between the cables C1, C2, and C3 on the one hand, and between the cables and the plastic material forming the part P, on the other hand.

According to the variant of figure 6C, the cable C comprises a wire W surrounded by a first sheath S1 which is in turn surrounded by another sheath S1'. The material of the sheath S1 and S1' may be different. More in particular the material of the sheath S1' may be chosen to be compatible with the plastic material that is to be applied around the cable whilst the material of the sheath S1 may be incompatible with the plastic material applied around the cable.

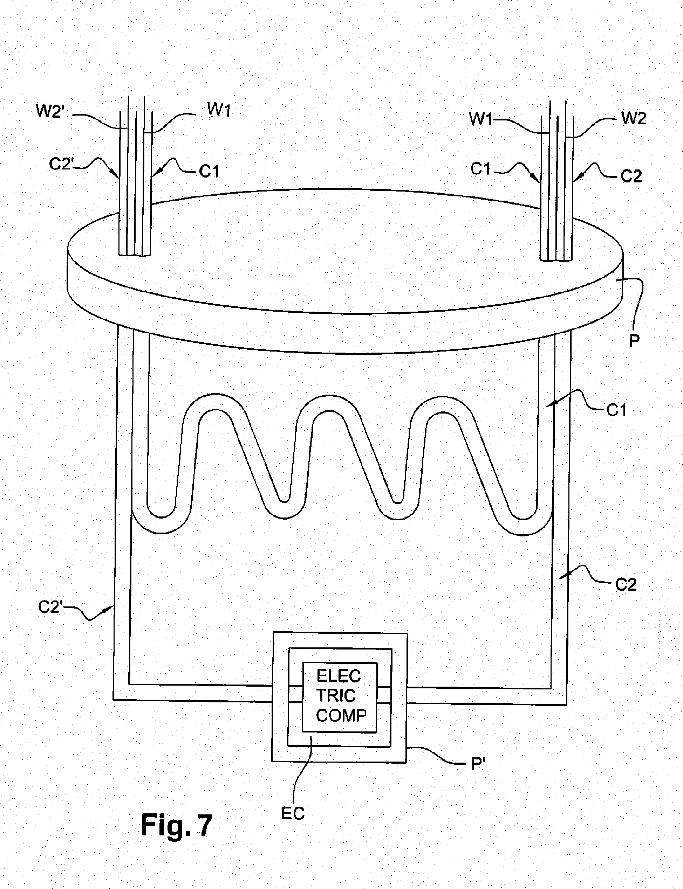

Figure 7 illustrates a third embodiment of two parts P, P' fixed to cables C1, C2, C2'. The first part P is fixed to cables C1, C2 and C2', while the second part P' is fixed to cables C2 and C2'. The first part P may be formed by overmoulding the cables C1, C2 and C2' e.g. using the method of figures 2A-2C, wherein a current is sent through cable C1 and/or C2, C2' during the overmoulding operation. In a similar way, the second part P' may be formed by overmoulding two cable end parts of the cables C2, C2' which are connected to an electronic component EC. To that end the electronic component may be placed in a cavity in a mould whilst connected to the two end parts of the cables C2, C2'. Next the mould may be closed and the assembly of the electronic component and the end parts may be overmoulded with an injected plastic material whilst sending an electric current through the cables C2, C2' such that a good bond is obtained between the sheath of the cables C2,C2' and the injected plastic material of part P'.

Embodiments of the method of the invention allow obtaining a sealed interface between a heated cable and a plastic part that is being formed e.g. by injection moulding (overmoulding), wherein polymer entanglements are achieved at the interface of the cable sheath and the plastic part. Surprisingly, it has been observed that the application of an electric current through the cable may be sufficient to increase its surface temperature to a sufficient degree so that the sheath and the plastic material are fused together during the forming of the plastic part.

Applications of embodiments of the invention are bulkheads with excellent seal and mechanical properties, flange parts for tanks containing cables with an excellent leak-tight and robust interface between the cable and the flange part, etc. A typical application of such a bulkhead or flange part is for mounting a heating element in a tank, e.g. in a urea tank, a diesel tank, a fuel tank, etc.

Whilst the principles of the invention have been set out above in connection with specific embodiments, it is to be understood that this description is merely made by way of example and not as a limitation of the scope of protection which is determined by the appended claims.

## Claims

1. A method for fixing a cable in a plastic part, comprising the steps of:
selecting a cable comprising a wire surrounded by a plastic sheath,
heating said wire;
applying a plastic material around said cable comprising said heated wire, wherein said heating is such that said plastic material is bonded to said sheath, said applied plastic material forming a plastic part which is fixed to the sheath.

2. The method of claim 1, wherein heating said wire comprises applying heat on said wire; or causing heat to be generated in said wire.

3. The method of claim 1 or 2, wherein said wire is a wire having an electrical resistance; wherein said heating comprises applying an electric current through said wire.

4. The method of any one of the previous claims, further comprising heating the plastic material before the applying thereof.

5. The method of any one of the previous claims, wherein the applying of the plastic material comprises overmoulding the cable with the plastic material.

6. The method of claim 5, wherein said overmoulding comprises:
- placing the cable between a first mould part comprising a first cavity and a second mould part comprising a second cavity, wherein said first and second cavity are designed for delimiting a volume which surrounds the cable;
- injecting the plastic material into said volume, around the heated cable.

7. The method of any one of the previous claims, wherein the plastic sheath is made of a polymer material that is compatible with the plastic material in the sense that polymer entanglements can be created at the interface of the sheath and the plastic material.

8. The method of any one of the previous claims, wherein the sheath is made of a polyamide material; and/or
wherein the plastic material is poly-ethylene or a polypropylene material optionally comprising an additive for increasing the polarity, a polyamide material.

9. An assembly of a part and a cable, said part being fixed to the cable, preferably according to the method of any one of the previous claims, said cable comprising a wire surrounded by a plastic sheath, said part comprising a plastic material which is bonded to said plastic sheath.

10. The assembly of claim 9, wherein the plastic material of the part is overmoulded on the sheath of the cable.

11. The assembly of claim 9 or 10, wherein said plastic material surrounds the cable over a length which is smaller than the length of the cable.

12. The assembly of any one of the claims 9-11, wherein an interface between said sheath and the plastic material comprises polymer entanglements between the material of the sheath and the plastic material; and/or
wherein the sheath is made of a polyamide material, and/or wherein the plastic material is a poly-ethylene or a polypropylene material optionally comprising an additive for increasing the polarity, or a polyamide material.

13. The assembly of any one of the claims 9-12, wherein said wire is a wire having an electrical resistivity which is larger than 0.01 Ohm*m.

14. Tank comprising an assembly of any one of the claims 9-13, wherein the part is mounted in a wall part of the tank, or is a wall part of the tank, or is the tank.

15. Tank of claim 14, wherein the tank comprises an internal heater comprising at least a portion of the cable of the assembly.
